# EUROPEAN PATENT SPECIFICATION

(11) **EP 0 716 956 B1**
(45) Date of publication and mention of the grant of the patent: **19.12.2001**
(21) Application number: 95830094.9
(22) Date of filing: 13.03.1995
(51) Int. Cl.: B60Q 7/00

(54) **Collapsible luminous element for signalling a stationary vehicle, provided with a further intermittent signal light**
Leuchtelement mit zusätzlichem blinkendem Licht zum Anzeigen eines stehenden Fahrzeuges
Elément lumineux pliant avec lumière intermittente supplémentaire pour signaler un véhicule à l'arrêt

(30) Priority: 16.12.1994 IT RM940221
(43) Date of publication of application: 19.06.1996
(73) Proprietor: Biasci, Bruno, I-57013 Rosignano Solvay (IT)
(72) Inventor: Biasci, Bruno, I-57013 Rosignano Solvay (IT)
(74) Representative: Massari, Marcello

(56) References cited:
- EP-A- 0 456 007
- EP-A- 0 656 445
- FR-A- 2 211 025
- FR-A- 2 617 450
- US-A- 4 489 306
- US-A- 5 155 667

## Description

The subject-matter of the present application is a collapsible luminous element for signalling a stationary vehicle, provided with a further intermittent signal light.

It is generally known how dangerous it can be a stationary vehicle on the side of the roadway and, all the more, on the roadway itself, especially when driving on expressways or after curves, cat's backs, humps and the like.

With reference to this subject, the Highway Code prescribes the possession and usage of the well-known triangle of reflective material, which triangle, however, has not proved to be satisfactorily visible and, accordingly, effective, either by day or by night.

The present application aims therefore to provide an element for signalling a stationary vehicle or, more generally, a danger on the roadway, which element, while taking the minimum room when stored in the boot of the car in inoperative position, is greatly visible, both by day and night, when in operation.

In this field FRA- 2.211.025 (Document D1) and U.S. 5.155.667 (Document D2)are known but they describe a different luminous element. In D1 the collapsible luminous element springs from the box when a locking element is removed as the coil spring, completly contained in the compressed condition in the box, snaps to the extended position.

D2 describes a luminous collapsible element comprising more elements nesting one inside the other and wherein the bottom rim of the upper element engages the top rim of the lower one but they are merely cilindrycal elements the diameter of which does not decrease from bottom to top as instead it is described and illustrated in the instant invention.

The signalling element being subject-matter of the present application consists of a flat base shaped like a box comprising a semicircular and a square part, and a signalling hollow body shaped like a frustum of cone contained and supported by the semicircular part of said base, which hollow body, as it will be better seen afterwards, can assume a retracted inoperative shape wherein it can be entirely contained in the box and an upright operative shape wherein it projects vertically from the base in full height.

The signalling body comprises a series of similar rings or sections having the base and top diameters which decrease from lower to upper element, and such a size that the bottom rim of superior element can engage with the top rim of inferior element.

Besides, the fustum-shaped sections are made of a translucent material, alternatively coloured in white and red, intended therefore to become luminous when lit from the inside.

On top of superior frustum-shaped ring, over a collar-lid, a circular seat is formed, closed by a cylindrical cap which is also made of a translucent material, wherein a lamp is lodged.

The bottom box of opaque material contains a second lamp placed at the bottom of the signalling body and a supply battery, preferably of the rechargeable kind, intended to feed both bottom and top lamps by means of a switch.

It will be useful to point out that the signalling element being subject-matter of the present application, which is similar in shape to the cones for signalling danger or a change of route presently used on roads and motorways, is not a component part of the car and is not intended to substitute the emergency triangle, rather it aims to increase safety and attention reducing the risks which an emergency stop due to whatever reason may involve, especially in case of heavy rain, by the light of dawn or dusk, or in case of mist or fog.

The subject-matter of the present application will be now described in greater detail with reference to the attached drawings, wherein:
fig.1 is a perspective view of the element in operative position;
fig. 2 is an elevation view of the element in the same position;
fig.3 is an axial section of the element as shown in fig.2;
fig.4 is an elevation view of the element in inoperative position;
fig.5 is an axial section of the elevation view shown in fig.4;
fig. 6 is a view from above of the element in inoperative position.

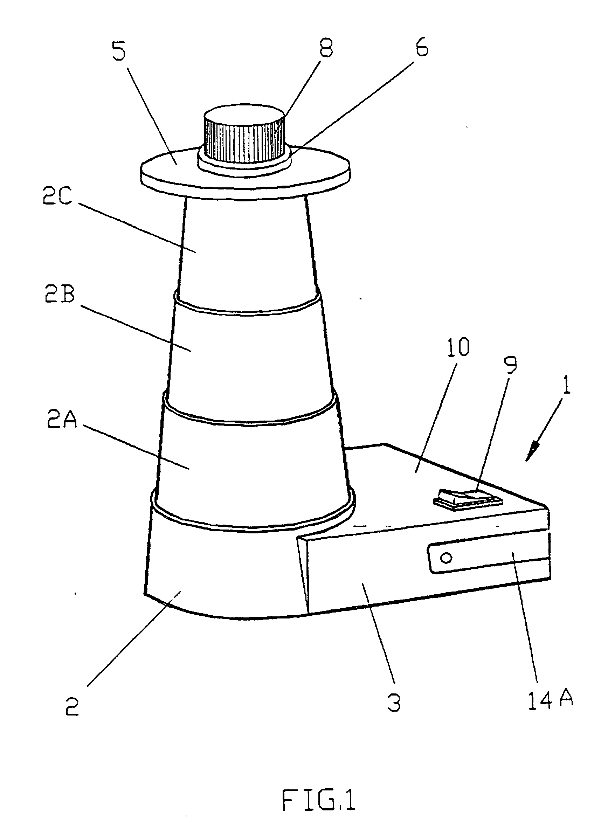

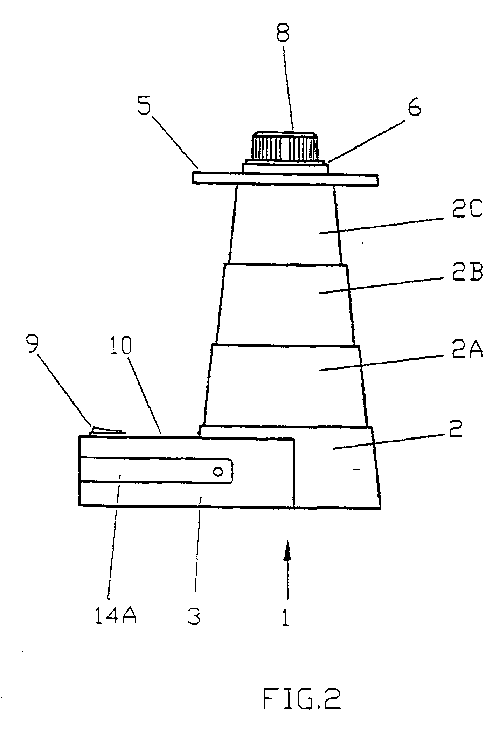

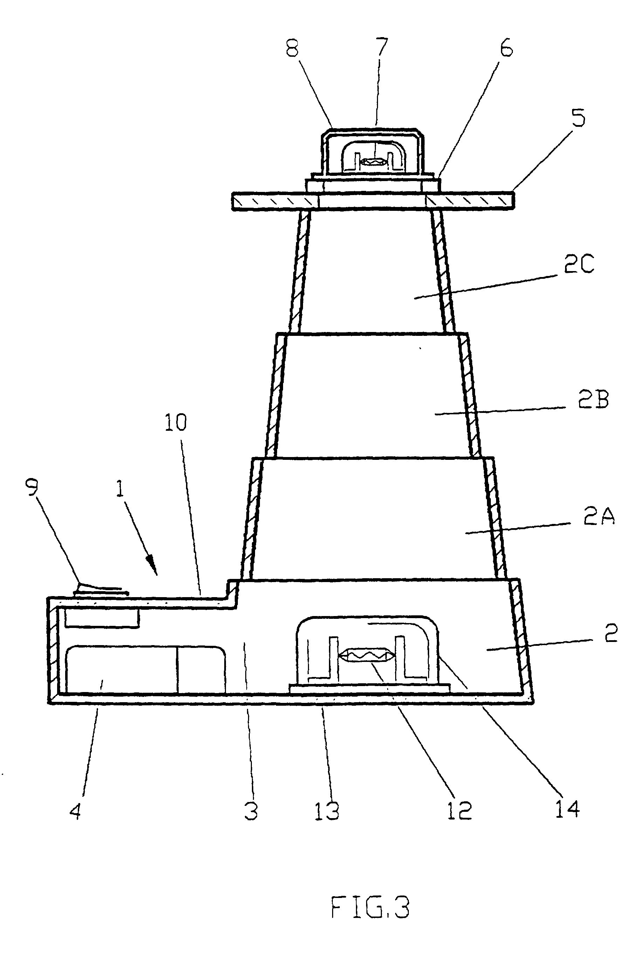

With reference to figures 1, 2 and 3, the signalling element, shown in its operative position, comprises a flat box 1 having a semicircular part 2 and a square part 3, and several frustum-shaped rings of a certain height, 2A, 2B and 2C, wherein the top rim of each ring has such a diameter as to accommodate the bottom rim of the upper ring, so that the two rims are engaged with each other, being the rings preferably made of a proper rigid plastic, translucent, alternatively coloured in red and white.

The bottom of lower ring 2A engages with the top rim of semicircular part 2 of box 1, which semicircular part is also slightly shaped like a frustum of cone and is actually the bottom frustum-shaped ring,

The inside of square part 3 of base 1 contains a battery 4 and is connected with the inside of semicircular part 2 of box or base ring 1.

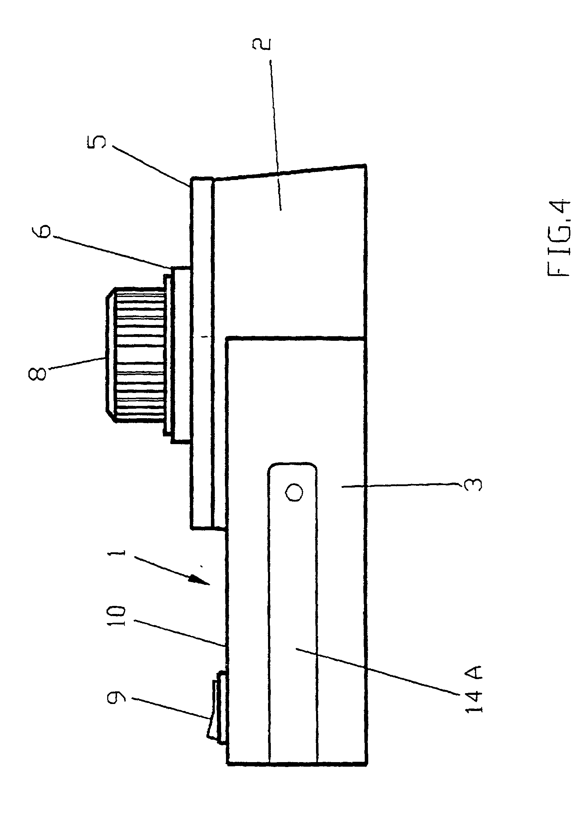

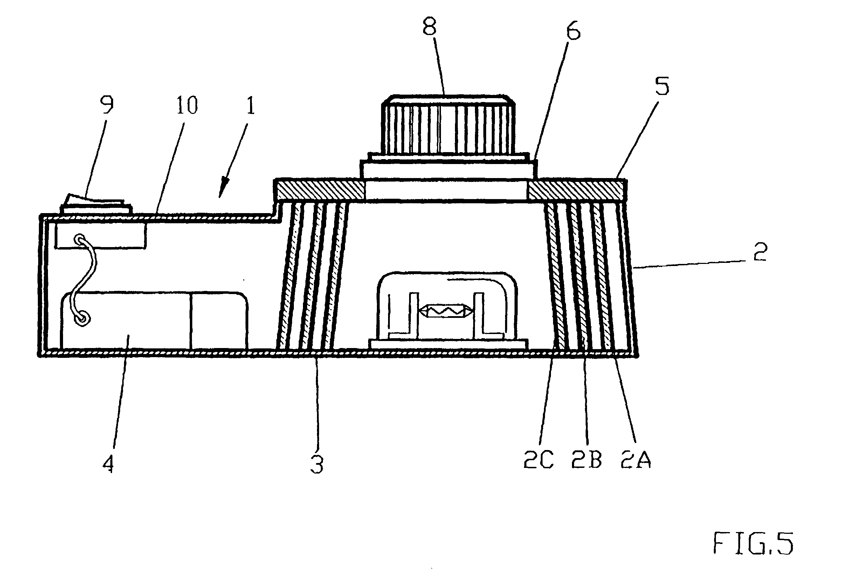

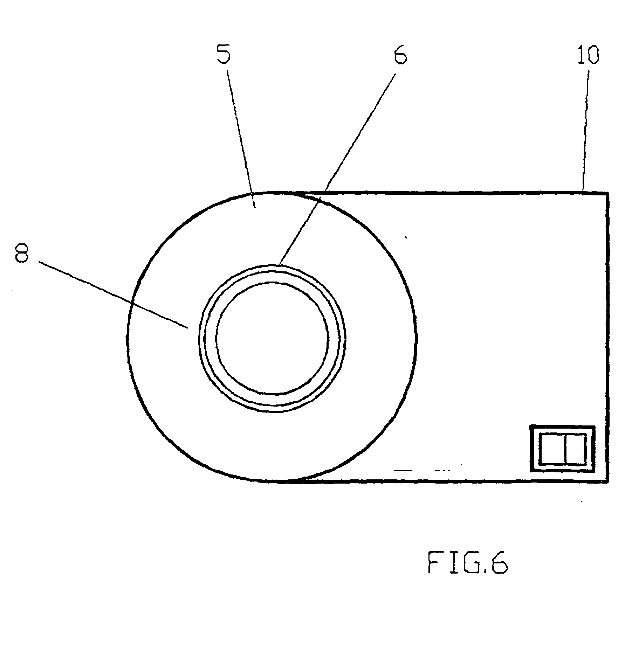

On top of upper frustum-shaped ring 2C a collar 5 has been fixed whose diameter is the same as the external diameter of the rim of the upper opening formed in part 2 of box 1, so as to function as a closing cover for the box when the element is in inoperative position (figures 4,5 and 6).

Over collar 5 a seat 6 is formed intended to accomodate a lamp 7, with its relative lampholder, closed by a red (or orange) translucent cap 8, being lamp 7 fed by battery 4 by means of switch 9, placed on upper face 10 of box 1.

As already mentioned, a second lamp 12, also fed by battery 4, is lodged in lampholder 13, placed in cylindrical part 2 of box 1 on the bottom of the conical body, so as to illuminate it from the inside when lit, so that the cone, because of the nature of the material which it is made of, becomes luminous and is perfectly visible in conditions of insufficient light. Lamp 12 is protected by a transparent cap 14.

Finally, the box is provided with a retractable handle 14A (fig.4) so as to be carried more easily.

The component parts above illustrated are obviously arranged in such a way that when the element is inoperative (figures 4-6) frustum-shaped rings 2A-2C accommodate the one within the other in part 2 of the box, with collar 5 closing the opening of the latter, cap 8 protruding over the collar.

In order to bring the element to the operative position it will be sufficient to lift collar 5 up to the point that the bottom rim of each frustum-shaped ring gets engaged with the top rim of the lower frustum-shaped ring so as to reach the situation shown in figures 1-3.

Thereafter, the element is placed on the roadway in the proper position and lamps 7 and 12 are lit so that the element will be perfectly visible at 360 degrees under any condition of light.

Lamp 7 can be possibly fed by means of an intermittence device.

In an alternative embodiment lamp 12 could be placed on top of frustum-shaped ring 2C, fixed to lower face of collar 5.

Obviously, inverting the operations the cone will be brought again to the inoperative position, wherein it is not cumbersome, and will be then placed with no trouble in the boot of the vehicle equipped with said cone. The size of both the conical body and the box can vary according to one's need.

## Claims

1. Collapsible luminous element for signalling a stationary vehicle, provided with a further intermittent signal light, small in size when in inoperative position and perfectly visible when in operative position, comprising a box-shaped flat base (1) having a semicircular part (2) provided with an upper opening, a square part and a signalling hollow body shaped like a frustum of cone which is contained and supported by said base (1) more precisely said semicircular part (2) said hollow body (2A, 2B, 2C) being entirely contained in said box (1) in said retracted inoperative condition while in said upright operative condition it projects vertically from said base (1) in full height, **characterized in that** said body shaped like a frustum of cone (2A, 2B, 2C) is composed of a series of rings similar in shape (2A, 2B, 2C), whose bottom and top diametres decrease from the lower to the upper element, and have such a size that the bottom rim of each superior element can firmly engage with the top rim of each inferior element when in said upper operative position, and that said frustum-shaped rings (2A, 2B, 2C) are made of a translucent material, alternatively coloured in white and red, so that the body itself is completely luminous when lit from inside.

2. The luminous signalling element of claim 1, wherein on top of said upper frustum-shaped ring (2C) a collar-lid (5) is fixed whose diameter is the same as the diameter of said circular opening, so as to close said opening when the element is in said retracted position over which collar(5) a circular seat (6) is formed, closed by a cylindrical cap (8), which cap is also made of a translucent material, wherein a lamp (7) is lodged.

3. The luminous signalling element of claim 1, wherein said hollow body lodges a second lamp (12) located at the base thereof.

4. The luminous signalling element of claim 3, wherein said bottom box (1) is made of an opaque material so that said second lamp (12), placed at the bottom of said signalling body, lights the body being a supply battery, preferably of the rechargeable kind, intended to feed first and second lamps through a switch, lodged in said box-shaped base (1).

5. The luminous signalling element of claim 3, wherein said first top lamp (7) is fed by means of an intermittence device.

6. The luminous signalling element of claim 1, wherein said box (1) is provided with a retractable handle (14A), so as to be carried more easily.

## Patentansprüche

1. Zusammenschiebbares Leuchtelement mit einem zusätzlichen Blinklicht zum Anzeigen eines stehenden Fahrzeuges, wobei das Leuchtelement in Nichtbetriebsstellung eine kleine Größe hat und in Betriebsstellung vollkommen sichtbar ist, bestehend aus einer flach-kastenförmige Basis (1) mit einem mit einer oberen Öffnung versehenen halbkreisförmigen Teil (2), mit einem rechteckigen Teil und einem kegelstumpfförmigen Signal-Hohlkörper, an und getragen von der Basis (1), genauer sind besagtes halbkreisförmiges Teil (2) und besagter Hohlkörper (2A, 2B, 2C) in besagter zusammengeschobener Nichtbetriebsstellung gänzlich enthalten in besagtem Kasten (1) und der Hohlkörper ragt in Betriebsstellung von der Basis (1) aus in voller Höhe vertikal nach oben, **dadurch gekennzeichnet, daß** der kegelstumpfförmige Hohlkörper (2A, 2B, 2C) zusammengesetzt ist aus einer Reihe von sich formentsprechenden Ringen (2A, 2B, 2C), deren untere und obere Durchmesser vom unteren zum oberen Element abnehmen und eine solche Größe haben, daß der Bodenrand jedes oberen Elementes, wenn in Betriebsstellung, fest im oberen Rand jedes darunter befindlichen Elementes sitzen kann, und daß besagte kegelstumpfförmigwen Ringe (2A, 2B, 2C) aus durchleuchtbarem Material, alternierend eingefärbt in weiß und rot, gebildet sind, so daß der Körper selbst vollständig leuchtet, wenn er von innen beleuchtet ist.

2. Leuchtelement nach Anspruch 1, bei dem oben am besagten oberen, kegelstumpfförmigen Ring (2C) ein Abdeckkragen (5) befestigt ist, dessen Durchmesser dem der besagten kreisförmigen Öffnung derart entspricht, daß diese verschlossen ist, wenn sich das Element in zusammengeschobener Stellung befindet, wobei über dem Abdeckkragen (5) ein kreisförmiger, von einer zylindrischen, ebenfalls aus durchleuchtbarem Material gebildeten Kappe (8) verschlossener Sitz (6) ausgeformt ist, in welcher Kappe eine Lichtquelle (7) angeordnet ist.

3. Leuchtelement nach Anspruch 1, bei dem der Hohlkörper eine zweite Lichtquelle (12), plaziert an dessen Basis, enthält.

4. Leuchtelement nach Anspruch 3, bei dem besagter Bodenkasten (1) aus einem opaken Material gebildet ist und besagte zweite, den Körper beleuchtende Lichtquelle (12), plaziert am Boden des Signalkörpers, enthält und eine Versorgungsbatterie, vorzugsweise von wiederaufladbarer Art, für die Versorgung der ersten und zweiten Lichtquelle per einem Schalter.

5. Leuchtelement nach Anspruch 3, bei dem besagte obere Lichtquelle (7) über einen Unterbrecher versorgt ist.

6. Leuchtelement nach Anspruch 1, bei dem zwecks leichterem Tragens der Kasten (1) mit einem rückziehbaren Griff (14 A ) versehen ist.

## Revendications

1. Élément lumineux pliant avec lumière intermittente supplémentaire pour signaler un vèhicle à l'arrêt de dimensions réduites quand dans la position inactive et parfaitement visible quand dans la position opérationnelle comprenant une base plate (1) en forme de boîte ayant une partie semi-circulaire (2) munie d'une ouverture supérieure, une partie carrée et un corps creux de signalisation de forme tronconique qui est contenu et soutenu par ladite base (1), plus précisément par ladite partie semi-circulaire (2) ledit corps tronconique (2A, 2B, 2C) étant complètement contenu dans ladite boîte (1) dans ladite position inactive tandis que dans ladite condition opérationnelle, verticale, il sort verticalement de ladite base (1) dans toute sa hauteur, **caractérisé en ce que** ledit corps tronconique (2A, 2B, 2C) est formé par une série de bagues de forme similaire (2A, 2B, 2C) les diamètres de la base et de la sommité desquelles diminuent de l'élément inférieure à l'élément supérieur, ayant dimensions telles que le bord inférieur de chaque élément supérieur peut solidement s'engager avec le bord supérieur de chaque élément inférieur quand dans ladite position opérationnelle et que lesdites bagues tronconiques (2A, 2B, 2C) sont faites d'une matière translucide colorée alternativement en blanc et rouge de façon que le corps est complètement lumineux quand illuminé de l'intérieur.

2. L'élément lumineux de la revendication 1, dans lequel sur la sommité de ladite bague tronconique supérieur (2C) est fixé un collier couvercle (5) le diamètre duquel est égale au diamètre de ladite ouverture, de façon à fermer ladite ouverture quand l'élément est dans ladite position inactive, au-dessus duquel il y a une siège formée par une calotte cylindrique, elle aussi d'une matière translucide dans laquelle est contenue une lampe.

3. L'élément lumineux de signalisation de la revendication 1, dans lequel ledit corps creux contient une seconde lampe placée à la base de ce dernier.

4. L'élément lumineux de signalisation de la revendication 3 dans lequel ladite boîte de base (1) est d'une matière opaque de façon que ladite seconde lampe (12) placée à la base dudit corps de signalisation, éclaire ce dernier, une batterie, préférablement du type rechargeable pour alimenter lesdites première et seconde lampe par l'intermédiaire d'un interrupteur étant placé dans ladite base en forme de boîte.

5. L'élément lumineux de signalisation de la revendication 3, dans lequel ladite première lampe de sommité (7) est alimentée par l'intermédiaire d'un dispositif d'allumage intermittent.

6. L'élément lumineux de signalisation de la revendication 1, dans lequel ladite boîte (1) est munie d'une poignée rentrante pour en faciliter le transport.
